(19) **Europäisches Patentamt / European Patent Office / Office européen des brevets**

(11) **EP 4 657 573 A1**

(12) **EUROPEAN PATENT APPLICATION**
published in accordance with Art. 153(4) EPC

(43) Date of publication:
**03.12.2025 Bulletin 2025/49**

(21) Application number: **24767357.7**

(22) Date of filing: **29.02.2024**

(51) International Patent Classification (IPC):
**H01M 4/66** (2006.01)   **H01M 10/04** (2006.01)
**H01M 10/052** (2010.01)   **G01N 23/207** (2018.01)
**H01M 4/02** (2006.01)

(52) Cooperative Patent Classification (CPC):
**H01M 50/107; H01M 4/66; H01M 4/661;
H01M 10/0587; C25D 1/04; H01M 2004/021;
H01M 2004/027; Y02E 60/10; Y02P 70/50**

(86) International application number:
**PCT/KR2024/002692**

(87) International publication number:
**WO 2024/186068 (12.09.2024 Gazette 2024/37)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 03.03.2023  KR 20230028787
                05.04.2023  KR 20230044730
                21.04.2023  KR 20230052680
                04.05.2023  KR 20230058313
                28.02.2024  KR 20240028937

(71) Applicant: **LG Energy Solution, Ltd.**
**Seoul 07335 (KR)**

(72) Inventors:
• **JEONG, Yeon Beom**
  **Daejeon 34122 (KR)**
• **MOON, Jae Won**
  **Daejeon 34122 (KR)**
• **YU, Hyung Kyun**
  **Daejeon 34122 (KR)**
• **PAENG, Ki Hoon**
  **Daejeon 34122 (KR)**
• **NA, Seon Hyeong**
  **Daejeon 34122 (KR)**

(74) Representative: **Hoffmann Eitle**
**Patent- und Rechtsanwälte PartmbB
Arabellastraße 30
81925 München (DE)**

(54) **NEGATIVE ELECTRODE CURRENT COLLECTOR AND CAN-TYPE SECONDARY BATTERY**

(57)    A negative electrode current collector according to the present invention is 6-10 $\mu$m thick and has work-hardening exponent n of 0.10-0.25 according to the following formula 1. [Formula 1] $\sigma = K \times \varepsilon^n$ where $\sigma$ is true stress, K is a strength coefficient, $\varepsilon$ is true strain, and n is a work-hardening exponent.

[FIG. 1]

**Description**

**TECHNICAL FIELD**

This application is based on and claims priority from Korean Patent Application Nos. 10-2023-0028787 filed on March 3, 2023, 10-2023-0044730 filed on April 5, 2023, 10-2023-0052680 filed on April 21, 2023, 10-2023-0058313 filed on May 4, 2023, and 10-2024-0028937 filed on February 28, 2024, the disclosures of which are incorporated herein.
The present invention relates to a negative electrode current collector and a can-type secondary battery manufactured using the negative electrode current collector.

**BACKGROUND ART**

With the technical development and the rising demand for electric automobiles and energy storage systems (ESS), the demand for batteries useful as energy sources has increased rapidly, and in response, studies are being conducted on batteries that can meet various needs. Especially, as power sources of these devices, lithium secondary batteries are being vigorously studied, which have the high energy density and the excellent lifetime and cycle characteristics.
In general, according to the materials of battery cases, lithium secondary batteries are classified into can-type batteries in which an electrode assembly is embedded in a cylindrical or prismatic metal can, and pouch type batteries in which an electrode assembly is embedded in a pouch-shaped case made of an aluminum laminate sheet. The electrode assembly is a rechargeable power generation element that includes a positive electrode, a negative electrode, and a separator interposed between the positive and negative electrodes. Here, the negative electrode may have a structure in which a negative electrode current collector and a negative electrode active material layer are sequentially stacked, and typically, a copper foil may be used as the negative electrode current collector.
Meanwhile, in a can-type battery, the stress concentration appears in the transverse direction due to its structural feature, and hence, when a negative electrode current collector is designed without considering this directionality, and thus, a negative electrode current collector with a conspicuous particular directionality is applied, short may occur in the negative electrode, which degrades the lifetime performance of the battery. The present invention designs the negative electrode current collector by taking into account mechanical properties of the negative electrode current collector such as elongation and strength, and provides the negative electrode current collector having the high elongation and strength, which are suitable to be applied to the can-type battery.

**DISCLOSURE OF THE INVENTION**

**TECHNICAL PROBLEM**

The present disclosure provides a negative electrode current collector having mechanical properties suitable to be applied to a can-type secondary battery, and a can-type secondary battery manufactured using the negative electrode current collector.

**TECHNICAL SOLUTION**

According to an embodiment of the present invention, a negative electrode current collector has a thickness of 6 $\mu$m to 10 $\mu$m, and a work hardening exponent "n" of 0.10 to 0.25, which is defined by Equation 1 below,

$$[\text{Equation 1}]$$

$$\sigma = K \times \varepsilon^n$$

in Equation 1 above, "$\sigma$" represents a true stress, "K" represents a strength factor, "$\varepsilon$" represents a true strain, and "n" is a work hardening exponent.
A dislocation density of the negative electrode current collector may be $4 \times 10^7$/mm$^2$ or more.
A yield strength of the negative electrode current collector may be 31 kgf/mm$^2$ or more.
An elastic modulus of the negative electrode current collector may be 130 GPa to 140 GPa.
An elongation of the negative electrode current collector may be 13 % or more.
The negative electrode current collector may include a copper thin film. The copper thin film may be an electrolytic copper foil, and the electrolytic copper foil may have a drum side and an air side opposite to the drum side. The average size of grains included in the drum side may be 0.50 $\mu$m or less. The average size of gains included in the air side may be 0.68

μm or less. The average size of the grains included in the drum side may be smaller than the average size of the grains included in the air side.

The negative electrode current collector may have TC(200) and TC(220) of 2.20 or less, where TC(200) and TC(220) are defined by Equation 2 below,

[Equation 2]

$$TC(\mathrm{hkl}) = \frac{I(hkl)/I_0(hkl)}{\frac{1}{4}\left(\frac{I(111)}{I_0(111)} + \frac{I(200)}{I_0(200)} + \frac{I(220)}{I_0(220)} + \frac{I(311)}{I_0(311)}\right)}$$

in Equation 2 above, I(hkl) represents a peak intensity of a (hkl) crystal plane in an XRD graph obtained by performing an X-ray diffraction analysis on the negative electrode current collector at 25 °C, and

$I_0$(hkl) represents a peak intensity of a (hkl) crystal plane in an XRD graph of a reference sample,
in which $I_0$(111)=100, $I_0$(200)=46, $I_0$(220)=20, and $I_0$(311)=17.

The negative electrode current collector may have TC(111) of 2.20 or less, which is defined by Equation 2 above. A ratio of TC(111) to TC(200) (TC(111)/TC(200)) may be 0.8 or more. The negative electrode current collector may have TC(311) of 2.20 or less, which is defined by Equation 2 above.

A ratio of TC(200) to a total sum of TC(111), TC(200), TC(220), and TC(311) defined by Equation 2 above may be 40 % or less, and a ratio of a sum of TC(220) and TC(311) to the total sum of TC(111), TC(200), TC(220), and TC(311) may be 50 % or more. A ratio of TC(111) to a total sum of TC(111), TC(200), TC(220), and TC(311) defined by Equation 2 above may be 20% or more.

According to an embodiment of the present invention, a can-type secondary battery includes: an electrode assembly including a negative electrode, a separator, and a positive electrode that are sequentially stacked and wound in one direction; and a can-shaped case that accommodates the electrode assembly. The can-type secondary battery may be a cylindrical type battery having a diameter of 15 mm or more.

## ADVANTAGEOUS EFFECTS

Since the negative electrode current collector according to the present invention satisfies the thickness of 6 μm to 10 μm and the work hardening exponent "n" of 0.10 to 0.25, it has the high work hardening performance as compared to a negative electrode current collector that does not satisfy the numerical ranges above, and therefore, has the high processability and the excellent mechanical properties, which are suitable to be applied to the can-type secondary battery. Specifically, the negative electrode current collector of the present invention is elongated without undergoing crack/short even when deformed into the jelly roll shape and inserted into the can-shaped case.

## BRIEF DESCRIPTION OF THE DRAWINGS

The drawings attached herewith are merely illustrative of embodiments of the present invention, and take on the role of further facilitating the understanding of the technical idea of the present invention along with the descriptions herein. Thus, the present invention should not be construed as being limited to those illustrated in the drawings.

FIG. 1 is a view illustrating a secondary battery according to an embodiment of the present invention.
FIG. 2 is a view illustrating a structure of a cap assembly according to an embodiment of the present invention.
FIG. 3 is an EBSD inverse pole figure (IPF) map obtained by capturing an image of an air side of an electrolytic copper foil of Example 1 at a 2000x magnification.
FIG. 4 is an EBSD inverse pole figure (IPF) map obtained by capturing an image of an air side of an electrolytic copper foil of Example 2 at a 2000x magnification.
FIG. 5 is an EBSD inverse pole figure (IPF) map obtained by capturing an image of an air side of an electrolytic copper foil of Example 3 at a 2000x magnification.
FIG. 6 is an EBSD inverse pole figure (IPF) map obtained by capturing an image of an air side of an electrolytic copper foil of Comparative Example 3 at a 2000x magnification.
FIG. 7 is an EBSD inverse pole figure (IPF) map obtained by capturing an image of an air side of an electrolytic copper foil of Comparative Example 4 at a 2000x magnification.

## DETAILED DESCRIPTION

The advantages and features of the present invention and methods for implementing them will be clearly understood from embodiments to be described in detail later with reference to the accompanying drawings. However, the present invention is not limited to the embodiments, but may be implemented in various forms. The embodiments are provided only to thoroughly describe the present invention and comprehensively inform the scope of the present invention to one of ordinary skill in the art to which the present invention belongs, and the present invention can be defined by the scope described in the claims. Throughout the descriptions herein, the same reference numeral refers to the same components.

Unless otherwise defined, all terms (including technical and scientific terminologies) used in the descriptions herein have meanings that can be commonly understood by those with ordinary skill in the art to which the present invention belongs. Further, terms commonly used and defined in dictionaries should not be interpreted ideally or over interpreted unless they are not explicitly defined.

The terms used herein are intended to describe embodiments of the present invention, and should not be construed as limiting the present invention. In the descriptions herein, a singular word includes the plural unless otherwise defined. As used herein, the terms "comprises" and/or "comprising" do not exclude the presence or addition of one or more other components in addition to a specific component.

In the descriptions herein, when a part "includes" a specific component, this description does not indicate that the part excludes other components, but indicates that the part may further include other components, unless otherwise defined.

In the descriptions herein, the expression "A and/or B" indicates "A or B, or A and B."

In the descriptions herein, "%" indicates "% by weight" unless otherwise indicated.

In the descriptions herein, the "work hardening exponent 'n'" refers to the slope of the true stress "$\sigma$"-true strain "$\varepsilon$" curve, and is defined by Equation 1 below.

$$[\text{Equation 1}]$$

$$\sigma = K \times \varepsilon^n$$

In Equation 1 above, "$\sigma$" represents the true stress, "$K$" represents the strength factor, "$\varepsilon$" represents the true strain, and "$n$" represents the work hardening exponent.

In the descriptions herein, the "grain" indicates a single crystal grain unit having a regular arrangement of atoms.

In the descriptions herein, the "texture coefficient TC(hkl)" indicates the texture coefficient at a (hkl) crystal plane of the negative electrode current collector, which is calculated using the XRD graph obtained by performing the X-ray diffraction analysis on the negative electrode current collector at 25°C, and is defined by Equation 2 below.

$$[\text{Equation 2}]$$

$$TC(\text{hkl}) = \frac{I(hkl)/I_0(hkl)}{\frac{1}{4}\left(\frac{I(111)}{I_0(111)} + \frac{I(200)}{I_0(200)} + \frac{I(220)}{I_0(220)} + \frac{I(311)}{I_0(311)}\right)}$$

In Equation 2 above, I(hkl) represents the peak intensity of the (hkl) crystal plane in the XRD graph obtained by performing the X-ray diffraction analysis on the negative electrode current collector at 25 °C, and
$I_0$(hkl) represents the peak intensity of the (hkl) crystal plane in the XRD graph of a reference sample, in which $I_0$(111)=100, $I_0$(200)=46, $I_0$(220)=20, and $I_0$(311)=17.

## <Negative Electrode Current Collector>

The negative electrode current collector according to an embodiment of the present invention has a thickness of 6 $\mu$m to 10 $\mu$m and the work hardening exponent "$n$" which is defined by Equation 1 below of 0.10 to 0.25.

$$[\text{Equation 1}]$$

$$\sigma = K \times \varepsilon^n$$

In Equation 1 above, "σ" represents the true stress, "K" represents the strength factor, "ε" represents the true strain, and "n" represents the work hardening exponent.

Hereinafter, the negative electrode current collector of the present invention will be described in detail.

The thickness of the negative electrode current collector according to an embodiment of the present invention may be 6 μm to 10 μm, specifically, 6 μm to 8 μm. When the thickness of the negative electrode current collector satisfies this numerical range, the size of grains included in the collector becomes coarse relative to the thickness of the collector, and therefore, dislocations easily move and pile up at the grains. As a result, for example, the negative electrode current collector applied to the can-type secondary battery may fracture early before sufficiently deformed.

**In** order to resolve this problem, the inventors of the present invention have verified that the strength and elongation of the negative electrode current collector, which are suitable to be applied to the can-type secondary battery, can be ensured when the value of the work hardening exponent "n" according to Equation 1 above satisfies the range of 0.10 to 0.25.

The work hardening exponent "n" of the negative electrode current collector according to Equation 1 below may be 0.10 to 0.25, specifically 0.10 to 0.20, and more specifically 0.12 to 0.16.

$$[\text{Equation 1}]$$

$$\sigma = K \times \varepsilon^n$$

In Equation 1 above, "σ" represents the true stress, "K" represents the strength factor, "ε" represents the true strain, and "n" represents the work hardening exponent.

The true stress "σ" indicates a value obtained by dividing a load acting on a material by the actual area of the cross-sectional area to which the load is applied. The true strain "ε" indicates a value obtained by dividing a deformation amount of a material by the length of the material after the deformation. The work hardening exponent "n" indicates the slope of the true stress-true strain curve. The work hardening exponent "n" may be calculated from the stress-strain curve obtained by performing a tensile test using an extensometer (manufactured by: ZwickRoell, product name: videoXtens biax 2-150 HP). The extensometer may be a measurement device useful for measuring the elongation of the negative electrode current collector in a state where a load is applied to the negative electrode current collector.

In an embodiment of the present invention, when the work hardening exponent "n" of the negative electrode current collector is less than 0.10, the negative electrode current collector is not adequately hardened as being worked, resulting in insufficient strength. Thus, when applied to the can-type secondary battery, the negative electrode current collector may not withstand the manufacturing process, and further, crack or short occur even under a constant load. In a case the work hardening exponent "n" of the negative electrode current collector is greater than 0.25, the sufficient elongation is not ensured as the grains become ultrafine, which can lead to fractures of the negative electrode current collector under a repeated load when applied to the can-type secondary battery. The work hardening exponent "n" of the negative electrode current collector may be controlled, for example, by adjusting the kind or content of component to be added, and the condition of heat treatment.

According to an embodiment of the present invention, the dislocation density of the negative electrode current collector may be $4.0 \times 10^7/mm^2$ or more, $4.0 \times 10^7/mm^2$ to $5.5 \times 10^7/mm^2$, $4.0 \times 10^7/mm^2$ to $5.3 \times 10^7/mm^2$, or $4.0 \times 10^7/mm^2$ to $4.5 \times 10^7/mm^2$. The dislocation density indicates the total dislocation length per unit volume.

The dislocation density may be calculated from the full width at half maximum (FWHM) measured for each peak in an XRD graph obtained by performing an X-ray diffraction analysis on the negative electrode current collector.

For example, the X-ray diffraction (XRD) analysis is performed at 25 °C to obtain the XRD graph of the negative electrode current collector. The X-ray diffraction analysis may be performed using an X-ray diffractometer (Bruker AXS D4 Endeavor) at 25 °C under the following conditions.

- Source: Cu radiation ($K\alpha_1:K\alpha_2=8:2$)
- 2θ: 40° to 91°
- Step size: 0.0015 °/s
- Total scan time: 168 min
- Voltage: 40 kV
- Current: 40 mA

Next, the full width at half maximum (FWHM) is calculated from the peak of each (hkl) crystal plane in the obtained XRD graph.

The full width at half maximum (FWHM) indicates the difference between two 2θ values equal to half of the maximum magnitude value of each peak. Specifically, the FWHM is measured from the peak of the (111) crystal plane of the negative electrode current collector that is identified in a measurement range where 2θ is 42° to 45°. The FWHM is measured from the peak of the (200) crystal plane of the negative electrode current collector that is identified in a measurement range where 2θ is 49° to 52°. The FWHM is measured from the peak of the (220) crystal plane of the negative electrode current collector that is identified in a measurement range where 2θ is 73° to 76°. The FWHM is measured from the peak of the (311) crystal plane of the negative electrode current collector that is identified in a measurement range where 2θ is 89° to 91°.

Next, the dislocation density of the negative electrode current collector may be calculated from the FWHM measured by the method described above.

At this time, the dislocation density may be calculated by a known method. For example, in the present invention, the dislocation density may be calculated by, but not limited to, at least one method among the Scherrer method, the uniform deformation model (UDM), the uniform stress deformation model (USDM), the uniform deformation energy density model (UDEDM), the Williamson-Hall analysis, and models using the equation of modified Warren-Abelbach and the equation of modified Williamson-Hall. When the dislocation density of the negative electrode current collector satisfies the numerical range above, the negative electrode current collector has fine grains, which suppresses the movement of dislocations and the pile-up of dislocations at the grains, so that the elongation is improved, and the deformation behavior becomes smooth.

In an embodiment of the present invention, the yield strength of the negative electrode current collector may be 31 kgf/mm$^2$ or more, specifically 31 kgf/mm$^2$ to 32 kgf/mm$^2$ and more specifically 31 kgf/mm$^2$ to 31.5 kgf/mm$^2$. The yield strength indicates the maximum stress that can be applied to a material without causing a plastic deformation. The yield strength of the negative electrode current collector may be measured using an extensometer (manufactured by: ZwickRoell, product name: videoXtens biax 2-150 HP). When the yield strength of the negative electrode current collector satisfies the numerical range above, the negative electrode current collector may be prevented from cracking or fracturing when applied to the can-type secondary battery in which the stress concentrates in the transverse direction.

In an embodiment of the present invention, the elastic modulus of the negative electrode current collector may be 130 GPa to 140 GPa, specifically 130 GPa to 135 GPa and more specifically 130 GPa to 133 GPa. The elastic modulus indicates the slope of an elastic region in the stress-strain curve obtained by performing the tensile test. The elastic modulus of the negative electrode current collector may be measured using an extensometer (manufactured by: ZwickRoell, product name: videoXtens biax 2-150 HP). When the elastic modulus of the negative electrode current collector satisfies the numerical range above, the sufficient work hardening performance is ensured, so that the negative electrode current collector may withstand the load taking place during the process, which achieves the excellent durability.

In an embodiment of the present invention, the elongation of the negative electrode current collector is 13 % or more, specifically 3 % to 18 % and more specifically 13 % to 16 %. The elongation indicates the true strain of the negative electrode current collector. The elongation of the negative electrode current collector may be measured using an extensometer (manufactured by: ZwickRoell, product name: videoXtens biax 2-150 HP). When the elongation of the negative electrode current collector satisfies the numerical range above, the deformation behavior of the negative electrode current collector becomes smooth, so that the occurrence of short or crack may be prevented even when the negative electrode current collector is applied to the can-type secondary battery.

Meanwhile, additional properties of the negative electrode current collector according to the present invention may be verified from the texture coefficient at a specific crystal plane of the negative electrode current collector.

The texture coefficient TC(hkl) of the negative electrode current collector according to an embodiment of the present invention indicates the texture coefficient at a (hkl) crystal plane of the negative electrode current collector, which is calculated using the XRD graph obtained by performing the X-ray diffraction analysis on the negative electrode current collector at 25°C, and is defined by Equation 2 below.

[Equation 2]

$$TC(\text{hkl}) = \frac{I(hkl)/I_0(hkl)}{\frac{1}{4}\left(\frac{I(111)}{I_0(111)} + \frac{I(200)}{I_0(200)} + \frac{I(220)}{I_0(220)} + \frac{I(311)}{I_0(311)}\right)}$$

In Equation 2 above, I(hkl) represents the peak intensity of the (hkl) crystal plane in the XRD graph obtained by performing the X-ray diffraction analysis on the negative electrode current collector at 25 °C, and
I$_0$(hkl) represents the peak intensity of the (hkl) crystal plane in the XRD graph of a reference sample,
in which I$_0$(111)=100, I$_0$(200)=46, I$_0$(220)=20, and I$_0$(311)=17.

Specifically, the texture coefficient TC(hkl) of the negative electrode current collector may be calculated as follows.

First, the X-ray diffraction (XRD) analysis is performed at 25 °C to obtain the XRD graph of the negative electrode current collector, and the texture coefficients at the (111) crystal plane, the (200) crystal plane, the (220) crystal plane, and the (311) crystal plane of the negative electrode current collector may be calculated using Equation 2 above. At this time, the X-ray diffraction analysis may be performed using the X-ray diffractometer (Bruker AXS D4 Endeavor) at 25 °C under the following conditions.

- Source: Cu radiation ($K\alpha_1$:$K\alpha_2$=8:2)
- 2θ: 40° to 91°
- Step size: 0.0015°/s
- Total scan time: 168 min
- Voltage: 40 kV
- Current: 40 mA

Next, the peak intensity I(hkl) of each (hkl) crystal plane is calculated from the obtained XRD graph. Specifically, the peak intensity of the (111) crystal plane of the negative electrode current collector may be measured in the measurement range where 2θ is 42° to 45°. The peak intensity of the (200) crystal plane of the negative electrode current collector may be measured in the measurement range where 2θ is 49° to 52°. The peak intensity of the (220) crystal plane of the negative electrode current collector may be measured in the measurement range where 2θ is 73° to 76°. The peak intensity of the (311) crystal plane of the negative electrode current collector may be measured in the measurement range where 2θ is 89° to 91°.

Next, the peak intensity of the (hkl) crystal plane in the XRD graph of the reference sample is calculated. Specifically, the XRD diffraction peak intensity $I_0$(hkl) is calculated for each crystal plane of a standard powder defined according to the International Center for Diffraction Data (ICDD).

Last, the arithmetic mean value of I(hkl)/$I_0$(hkl) for all of the crystal planes is calculated, and then, I(hkl)/$I_0$(hkl) at a specific (hkl) plane is divided by the arithmetic mean value to obtain the texture coefficient TC(hkl) at the specific (hkl) plane.

The negative electrode current collector according to an embodiment of the present invention may have TC(200) and TC(220) of 2.20 or less, which are defined by Equation 2 above. For example, TC(200) and TC(220) may be 0.40 to 2.20, 0.50 to 1.80, or 0.80 to 1.80. When the negative electrode is manufactured by selecting the negative electrode current collector with TC(200) and TC(220) that satisfy the numerical range above, the stress may be prevented from concentrating in the particular direction of the negative electrode current collector. Accordingly, the short of the negative electrode may be prevented even when the negative electrode current collector is applied to the can-type secondary battery in which the stress concentrates in the transverse direction. Since the negative electrode current collector with TC(200) and/or TC(220) greater than 2.20 exhibit clear particular directionality, it may not withstand the manufacturing process when applied to the can-type secondary battery in which the stress concentrates in the transverse direction, resulting in short circuits.

TC(111) and/or TC(311) of the negative electrode current collector as well as TC(200) and TC(220) may be 2.20 or less. Specifically, TC(111) may be 0.80 to 1.80, and TC(311) may be 0.40 to 2.20, or 0.50 to 1.80. In this way, it may be verified that the stress does not concentrate in the particular direction of the negative electrode current collector when the texture coefficients at all of the crystal planes of the negative electrode current collector are 2.20 or less. Particularly, when TC(111) is less than 0.80, the negative electrode current collector exhibits high strength. However, the sufficient deformation amount may not be ensured, and it may not suitable to be applied to the can-type secondary battery.

In the negative electrode current collector, the ratio of TC(111) to TC(200) (TC(111)/TC(200)) may be 0.8 or more, 0.9 or more, 1.0 or more, or 1.0 to 2.0. When TC(111)/TC(200) satisfies this numerical range, more excellent mechanical properties may be obtained to be applied to the can-type secondary battery.

Meanwhile, in the negative electrode current collector, the ratio of TC(200) to the total sum of TC(111), TC(200), TC(220), and TC(311) may be adjusted to 40 % or less, specifically less than 35 % and more specifically less than 30 %, or 25 % to 30 %. When the ratio of TC(200) to the total sum of TC(111), TC(200), TC(220), and TC(311) satisfies this numerical range, the particular directionality of the negative electrode current collector does not become conspicuous, which may ensure the mechanical properties that may withstand the process when applied to the can-type secondary battery in which the stress concentrates in the transverse direction.

In the negative electrode current collector, the ratio of the sum of TC(220) and TC(311) to the total sum of TC(111), TC(200), TC(220), and TC(311) may be adjusted to 50 % or more, specifically 50 % to 65 % and more specifically 50 % to 60 %, or 53 % to 60 %. When the ratio of the sum of the texture coefficients of the (200) crystal plane and the (311) crystal plane to the total sum of the texture coefficients of the (111) crystal plane, the (200) crystal plane, the (220) crystal plane, and the (311) crystal plane is less than 50%, the slip transfer efficiency (Schmid Factor) decreases, and the mechanical deformation behavior of the negative electrode current collector does not become smooth, which may prevent the negative electrode current collector achieving optimal tensile strength and elongation. As a result, when the negative electrode current collector is applied to the can-type secondary battery in which the stress concentrates in the transverse direction, the negative electrode current collector may not withstand the process, and it may lead to cracks or fractures.

In the negative electrode current collector, the ratio of TC(111) to the total sum of TC(111), TC(200), TC(220), and TC(311) may be 20 % or more, specifically 20 % to 30 % and more specifically 22 % to 30 %.

Meanwhile, the negative electrode current collector may have the conductivity without causing chemical changes in the battery. The negative electrode current collector is, for example, a copper, a stainless steel, aluminum, nickel, titanium, heat-treated carbon, a copper or a stainless steel with its surface processed with carbon, nickel, titanium, silver or the like, or an aluminum-cadmium alloy. Preferably, the negative electrode current collector may include a copper thin film. In this case, the copper thin film may be an electrolytic copper foil. The copper thin film is, for example, an electrolytic copper foil manufactured by an electrolytic plating process. When the copper thin film is manufactured by the electrolytic plating process, the thickness of the negative electrode current collector may be thinned, and the energy density of the battery may be improved.

The negative electrode current collector may be a commercially available negative electrode current collector, or is manufactured by a manufacturing method of a negative electrode current collector well-known in the art such as a manufacturing method of an electrolytic copper foil. For example, the manufacturing method of the electrolytic copper foil may be performed as follows. First, a reaction tank is prepared, which is equipped with a negative electrode rotating drum and a positive electrode plate disposed facing the negative electrode rotating drum, and the reaction tank is filled with an electrolyte obtained by mixing copper sulfate and water. Next, the negative electrode rotating drum is rotated in a state where electricity is applied to the negative electrode rotating drum and the positive electrode plate, to make the copper electrodeposited onto the surface of the negative electrode rotating drum. Then, the electrodeposited copper is continuously extracted from the reaction tank to obtain a copper thin film. The obtained copper thin film is rolled through a roll press process, and the rolled copper thin film may be slit and sheeted to produce a copper collector.

In the electrolytic copper foil manufactured according to the method described above, one side of the electrolytic copper foil in contact with the negative electrode rotating drum is referred to as a drum side, and the opposite side to the drum side is referred to as an air side.

The average size of grains included in the drum side may be 0.50 $\mu$m or less, specifically 0.40 $\mu$m to 0.50 $\mu$m and more specifically 0.45 $\mu$m to 0.50 $\mu$m. The average size of grains included in the air side may be 0.68 $\mu$m or less, specifically 0.60 $\mu$m to 0.68 $\mu$m and more specifically 0.63 $\mu$m to 0.68 $\mu$m. The average size of grains indicates the average size of grains that are clearly separated by high angle grain boundaries, and may be measured by calculating the Misorientation angle using the electron backscatter diffraction (EBSD). When the average size of the grains included in each of the drum side and the air side satisfies the numerical range above, the number of grains in the thickness direction of the electrolytic copper foil is secured, forming the microstructural bimodal structure, so that dislocations pile up only at coarse grains, and fine grains suppress the movement of dislocations. As a result, both the high tensile strength value and the improved elongation may be achieved, and the mechanical properties suitable for the can-type secondary battery may be obtained.

In an embodiment of the present invention, the average size of the grains included in the drum side may be smaller than the average size of the grains included in the air side. In this case, the movement of dislocations is hindered by the fine grains included in the drum side, and dislocations pile up at the coarse grains included in the air side, which further facilitates the plastic deformation of the electrolytic copper foil, and as a result, improves the elongation and the strength of the electrolytic copper foil.

The negative electrode current collector may include fine irregularities on its surface, to enhance the bonding to the negative electrode active material. For example, the negative electrode current collector may be manufactured in various forms such as a film, a sheet, a foil, a net, a porous material, a foam, and a nonwoven fabric.

### <Can-Type Secondary Battery>

Next, the can-type secondary battery according to an embodiment of the present invention will be described.

The can-type secondary battery of the present invention includes an electrode assembly and a can-shaped case accommodating the electrode assembly. The electrode assembly includes a negative electrode, a separator, and a positive electrode, which are sequentially stacked and wound in one direction. The negative electrode includes the negative electrode current collector described above.

According to an embodiment of the present invention, the negative electrode may include a negative electrode current collector and a negative electrode active material layer formed on the negative electrode current collector. In this case, the negative electrode current collector is the negative electrode current collector according to the present invention.

According to an embodiment of the present invention, the negative electrode may not form the negative electrode active material layer on the negative electrode current collector. For example, the negative electrode may be the negative electrode current collector itself manufactured according to the present invention, or may have a structure in which a specific metal is physically bonded, rolled, or deposited on the negative electrode current collector. As for the deposition method, an electrodeposition or a chemical vapor deposition may be performed on the specific metal. In this case, the specific metal bonded/rolled/deposited on the negative electrode current collector includes one metal or an alloy of two metals selected from the group consisting of lithium (Li), nickel (Ni), tin (Sn), copper (Cu), and indium (In).

The negative electrode active material layer of the present invention may include a negative electrode active material, and may further include, for example, a conductive agent and a binder as necessary.

The negative electrode active material may include at least one selected from the group consisting of a lithium metal, a carbon material allowing the reversible intercalation/deintercalation of lithium ions, metals or alloys of the metals and lithium, a metal complex oxide, a material capable of doping and de-doping lithium, and a transition metal oxide.

As for the carbon material allowing the reversible intercalation/deintercalation of lithium ions, any carbon-based negative electrode active material commonly used in lithium ion secondary batteries may be used without particular limitation, and representative examples thereof include crystalline carbon, amorphous carbon, and combinations thereof. Examples of the crystalline carbon include graphite such as natural or artificial graphite in an amorphous, plate, flake, spherical, or fibrous form, and examples of the amorphous carbon include soft carbon (low temperature calcined carbon) or hard carbon, mesophase pitch carbide, and calcined cokes.

The metals or alloys of the metals and lithium may be metals or alloys of the metals and lithium selected from the group consisting of Cu, Ni, Na, K, Rb, Cs, Fr, Be, Mg, Ca, Sr, Si, Sb, Pb, In, Zn, Ba, Ra, Ge, Al, and Sn.

The metal complex oxide may be one selected from the group consisting of $PbO$, $PbO_2$, $Pb_2O_3$, $Pb_3O_4$, $Sb_2O_3$, $Sb_2O_4$, $Sb_2O_5$, $GeO$, $GeO_2$, $Bi_2O_3$, $Bi_2O_4$, $Bi_2O_5$, $Li_xFe_2O_3(0 \leq x \leq 1)$, $Li_xWO_2(0 \leq x \leq 1)$, and $Sn_xMe_{1-x}Me'_yO_z$ (Me: Mn, Fe, Pb, Ge; Me': Al, B, P, Si; the elements of Groups 1, 2, 3 of the periodic table, halogen; $0 < x \leq 1$; $1 \leq y \leq 3$; $1 \leq z \leq 8$).

The material capable of doping and de-doping lithium may be, for example, Si, $SiO_x$ ($0 < x \leq 2$), a Si-Y alloy (in which Y is an element selected from the group consisting of alkali metals, alkaline earth metals, the elements of Groups 13 and 14, transition metals, rare earth elements, and combinations thereof, but is not Si), Sn, $SnO_2$, or a Sn-Y (in which Y is an element selected from the group consisting of alkali metals, alkaline earth metals, the elements of Groups 13 and 14, transition metals, rare earth elements, and combinations thereof, but is not Sn), or may be a combination of at least one of these substances and $SiO_2$. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and combinations thereof.

The transition metal oxide may be, for example, a lithium-containing titanium composite oxide (LTO), vanadium oxide, or lithium vanadium oxide.

The negative electrode active material may be contained in a content of 60 wt% to 99 wt%, preferably 70 wt% to 99 wt% and more preferably 80 wt% to 98 wt% based on the total weight of the negative electrode active material layer.

The negative electrode conductive agent is a component that further improves the conductivity of the negative electrode active material, and is not particularly limited as long as it has the conductivity without causing chemical changes in the battery. For example, the following conductive material may be used: carbon powder such as carbon black, acetylene black, ketchen black, channel black, furnace black, lamp black, or thermal black; graphite powder such as natural graphite with a well-developed crystalline structure, artificial graphite, or graphite; conductive fiber such as carbon fiber or metal fiber; carbon fluoride powder; conductive powder such as aluminum powder or nickel powder; conductive whisker such as zinc oxide or potassium titanate; a conductive metal oxide such as titanium oxide; or a polyphenylene derivative.

The negative electrode conductive agent may be contained in a content of 1 wt% to 20 wt%, preferably 1 wt% to 15 wt% and more preferably 1 wt% to 10 wt% based on the total weight of the negative electrode active material layer.

The negative electrode binder is a component that assists the bonding among the negative electrode conductive agent, the negative electrode active material, and the negative electrode current collector. Examples of the binder include polyvinylidene fluoride (PVDF), polyvinyl alcohol, carboxymethylcellulose (CMC), starch, hydroxypropylcellulose, regenerated cellulose, polyvinylpyrrolidone, polyethylene, polypropylene, an ethylene-propylene-diene monomer, a sulfonated ethylene-propylene-diene monomer, a styrene-butadiene rubber, a fluorinated rubber, and various copolymers thereof.

Typically, the negative electrode binder may be contained in a content of 1 wt% to 20 wt%, preferably 1 wt% to 15 wt% and more preferably 1 wt% to 10 wt% based on the total weight of the negative electrode active material layer.

Meanwhile, the positive electrode may include a positive electrode current collector, and a positive electrode active material layer formed on the positive electrode current collector.

The positive electrode current collector is not particularly limited as long as it has the conductivity without causing chemical changes in the battery. For example, the positive electrode current collector may be a stainless steel, aluminum, nickel, titanium, calcined carbon, or aluminum or a stainless steel with its surface processed with carbon, nickel, titanium, silver or the like.

The positive electrode current collector may have the thickness of 3 $\mu$m to 500 $\mu$m, and may include fine irregularities on the surface thereof to enhance the bonding to the positive electrode active material layer. For example, the positive electrode current collector may be manufactured in various forms such as a film, a sheet, foil, a net, a porous material, a foam, and a nonwoven fabric.

The positive electrode active material layer may include a positive electrode active material, and may further include, for example, a conductive agent and a binder as necessary.

The positive electrode active material is a compound allowing the reversible intercalation/deintercalation of lithium, and may include a lithium metal oxide containing lithium and one or more metals among cobalt, manganese, nickel, and aluminum. For example, the lithium metal oxide may include one compound or two or more compounds among a lithium-manganese-based oxide (e.g., $LiMnO_2$ and $LiMn_2O_4$), a lithium-cobalt-based oxide (e.g., $LiCoO_2$), a lithium-nickel-based oxide (e.g., $LiNiO_2$), a lithium-nickel-manganese-based oxide (e.g., $LiNi_{1-Y}Mn_YO_2$ (where $0<Y<1$) and $LiMn_{2-Z}Ni_ZO_4$ (where $0<Z<2$)), a lithium-nickel-cobalt-based oxide (e.g., $LiNi_{1-Y1}Co_{Y1}O_2$ (where $0<Y1<1$)), a lithium-manganese-cobalt-based oxide (e.g., $LiCo_{1-Y2}Mn_{Y2}O_2$ (where $0<Y2<1$) and $LiMn_{2-Z1}Co_{Z1}O_4$ (where $0<Z1<2$)), a lithium-nickel-manganese-cobalt-based oxide (e.g., $Li(Ni_pCo_qMn_r)O_2$ (where $0<p<1$, $0<q<1$, $0<r<1$, and $p+q+r=1$) and $Li(Ni_{p1-}Co_{q1}Mn_{r1})O_4$ (where $0<p1<2$, $0<q1<2$, $0<r1<2$, and $p1+q1+r1=2$)), a lithium-nickel-cobalt-transition metal (M) oxide (e.g., $Li(Ni_{p2}Co_{q2}Mn_{r2}M_{s2})O_2$ (where M is selected from the group consisting of Al, Fe, V, Cr, Ti, Ta, Mg, and Mo, p2, q2, r2, and s2 are each an atomic fraction of an independent element and satisfy $0<p2<1$, $0<q2<1$, $0<r2<1$, $0<s2<1$, and $p2+q2+r2+s2=1$)), and a lithium iron phosphate (e.g., $Li_{1+a}Fe_{1-x}M_x(PO_{4-b})X_b$ (where M is at least one species selected from Al, Mg, and Ti, X is at least one species selected from F, S, and N, and $-0.5\leq a\leq 0.5$, $0\leq x\leq 0.5$, and $0\leq b\leq 0.1$).

Among the compounds above, from the view point of enhancing the capacity characteristics and the safety of the battery, the lithium metal oxide may be any one compound or a mixture of two or more compounds among $LiCoO_2$, $LiMnO_2$, $LiNiO_2$, lithium nickel manganese cobalt oxide (e.g., $Li(Ni_{1/3}Mn_{1/3}Co_{1/3})O_2$, $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, and $Li(Ni_{0.8}Mn_{0.1}Co_{0.1})O_2$), lithium nickel cobalt aluminum oxide (e.g., $Li(Ni_{0.8}Co_{0.15}Al_{0.05})O_2$), lithium nickel manganese cobalt aluminum oxide (e.g., $Li(Ni_{0.86}Co_{0.05}Mn_{0.07}Al_{0.02})O_2$), and lithium iron phosphate (e.g., $LiFePO_4$).

The positive electrode active material may be contained in a content of 60 wt% to 99 wt%, preferably 70 wt% to 99 wt% and more preferably 80 wt% to 98 wt% based on the total weight of the positive electrode active material layer.

The positive electrode conductive agent is a component that further improves the conductivity of the positive electrode active material, and is not particularly limited as long as it has the conductivity without causing chemical changes in the battery. For example, the following conductive material may be used: carbon powder such as carbon black, acetylene black, ketchen black, channel black, furnace black, lamp black, or thermal black; graphite powder such as natural graphite with a well-developed crystalline structure, artificial graphite, or graphite; conductive fiber such as carbon fiber or metal fiber; carbon fluoride powder; conductive powder such as aluminum powder or nickel powder; conductive whisker such as zinc oxide or potassium titanate; a conductive metal oxide such as titanium oxide; or a polyphenylene derivative.

Typically, the positive electrode conductive agent may be contained in a content of 1 wt% to 20 wt%, preferably 1 wt% to 15 wt% and more preferably 1 wt% to 10 wt% based on the total weight of the positive electrode active material layer.

The positive electrode binder is a component that assists the bonding among the positive electrode conductive agent, the positive electrode active material, and the positive electrode current collector.

Examples of the positive electrode binder include polyvinylidene fluoride (PVDF), polyvinyl alcohol, carboxymethylcellulose (CMC), starch, hydroxypropylcellulose, regenerated cellulose, polyvinylpyrrolidone, polyethylene, polypropylene, an ethylene-propylene-diene monomer, a sulfonated ethylene-propylene-diene monomer, a styrene-butadiene rubber, a fluorinated rubber, and various copolymers thereof.

Typically, the positive electrode binder may be contained in a content of 1 wt% to 20 wt%, preferably 1 wt% to 15 wt% and more preferably 1 wt% to 10 wt% based on the total weight of the positive electrode active material layer.

Meanwhile, the separator is not particularly limited as long as it is commonly used in secondary batteries, and for example, may have a low resistance to the ion transport by the electrolyte and an excellent electrolyte impregnation ability.

For example, the separator may be a porous polymer film including a polyolefin-based polymer such as ethylene homopolymer, propylene homopolymer, ethylene/butene copolymer, ethylene/hexene copolymer, or ethylene/methacrylate copolymer, or a stacked structure of two or more thereof. Further, the separator may be a common porous nonwoven fabric, for example, a nonwoven fabric made of a glass fiber with a high melting point or polyethyleneterephthalate fiber.

The secondary battery according to an embodiment of the present invention may include an electrolyte. In this case, the electrolyte may be a nonaqueous electrolyte. The nonaqueous electrolyte may include, but is not particularly limited to, an organic solvent and lithium salt which are commonly used in the art.

The organic solvent is not particularly limited as long as it serves as a medium that transports ions involved in the electrochemical reaction of the battery. Specifically, the organic solvent may be an ester-based solvent such as methyl acetate, ethyl acetate, γ-butyrolactone, or ε-caprolactone; an ether-based solvent such as dibutyl ether or tetrahydrofuran; a ketone-based solvent such as cyclohexanone; an aromatic hydrocarbon-based solvent such as benzene or fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), or propylene carbonate (PC).

Among these compounds, the carbonate-based solvent may be used, or a mixture of the following compounds may be used: cyclic carbonate (*e.g.,* ethylene carbonate or propylene carbonate) exhibiting the high ion conductivity and the high dielectric constant that can improve the charge and discharge performance of the battery, and a linear carbonate-based compound (*e.g.,* ethylmethylcarbonate, dimethylcarbonate, or diethylcarbonate) having the low viscosity.

The lithium salt is not particularly limited as long as it is a compound that can provide lithium ions used in lithium secondary batteries. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. LiCl, LiI, or $LiB(C_2O_4)_2$. The lithium salt may be contained at a concentration of 0.6 mol% to 2 mol% in the electrolyte.

Meanwhile, the nonaqueous electrolyte according to the present invention may include additives as necessary, in order to further improve the properties of the secondary battery.

Examples of the additives include at least one selected from the group consisting of a cyclic carbonate-based compound, a halogen-substituted carbonate-based compound, a nitrile-based compound, a sultone-based compound, a sulfate-based compound, a phosphate-based compound, a borate-based compound, a benzene-based compound, an amine-based compound, a silane-based compound, and a lithium salt-based compound.

The cyclic carbonate-based compound may be, for example, vinylene carbonate (VC) or vinylethylene carbonate (VEC).

The halogen-substituted carbonate-based compound may be, for example, fluoroethylene carbonate (FEC).

The nitrile-based compound may be, for example, succinonitrile, adiponitrile, hexantricyanide, or 1,4-dicyano-2-butene.

The sultone-based compound may be, for example, 1,3-propanesultone or 1,3-propenesultone.

The sulfate-based compound may be, for example, ethylene sulfate (Esa), trimethylene sulfate (TMS), or methyl trimethylene sulfate (MTMS).

The phosphate-based compound may be, for example, at least one compound selected from the group consisting of lithium difluoro(bisoxalato)phosphate, lithium difluorophosphate, tetramethyl trimethyl silyl phosphate, trimethyl silyl phosphate, tris(2,2,2-trifluoroethyl)phosphate, and tris(trifluoroethyl)phosphate.

The borate-based compound may be, for example, tetraphenylborate or lithium oxalyldifluoroborate (LiODFB).

The benzene-based compound may be, for example, fluorobenzene, the amine-based compound may be, for example, triethanolamine or ethylenediamine, and the silane-based compound may be, for example, tetravinylsilane.

The lithium salt-based compound is different from the lithium salt contained in the nonaqueous electrolyte, and may be at least one compound selected from the group consisting of $LiPO_2F_2$, LiODFB, LiBOB (lithium bisoxalatoborate $(LiB(C_2O_4)_2)$, and $LiBF_4$.

The additives may be used individually, or in a mixture of two or more thereof.

The total amount of the additives may be 1 wt% to 20 wt%, preferably 1 wt% to 15 wt% based on the total weight of the electrolyte. When the additives are included in this range, films may be stably formed on the electrodes, the ignition phenomenon may be suppressed in the event of overcharging, the occurrence of side reactions may be prevented during the initial activation of the secondary battery, and the additives may be prevented from being residual or precipitated.

The can-type secondary battery of the present invention may be manufactured by inserting the electrode assembly, which is fabricated by disposing the separator between the positive and negative electrodes, into the can-shaped case, injecting the electrolyte thereinto, and sealing the case. Or, the can-type secondary battery may be manufactured by fabricating the electrode assembly, impregnating the electrode assembly in the electrolyte, inserting the resulting product into the can-shaped case, and sealing the case.

The can-shaped case may be cylindrical or prismatic. The electrode assembly described above may be mounted in the can-shaped case. According to an embodiment of the present invention, the can-type secondary battery may be a cylindrical secondary battery. The cylindrical battery has advantages in that it has the high energy density per volume and can be easily manufactured in bulk.

The can-type secondary battery of the present invention may be a cylindrical type battery having a form factor ratio (defined as a value obtained by dividing a diameter of the cylindrical type battery by a height, that is, a ratio of the diameter (T) to the height (H)) of 0.2 or more, 0.4 or more, or 0.4 to 0.6. Herein, the form factor means a value representing the diameter and height of the cylindrical type battery.

The can-type secondary battery of the present invention may be a cylindrical type battery having a diameter of 15 mm or more, 40 mm or more, or 45 mm or more. For example, it may be a 1865 cell (diameter 18 mm, height 65 mm, form factor ratio 0.227), a 2170 cell (diameter 21 mm, height 70 mm, form factor ratio 0.3), a 46110 cell (diameter 46 mm, height 110 mm, form factor ratio 0.418), a 48110 cell (diameter 48 mm, height 110 mm, form factor ratio 0.436), a 4880 cell (diameter 48 mm, height 80 mm, form factor ratio 0.600), or a 4680 cell (diameter 46 mm, height 80 mm, form factor ratio 0.575). In a number representing the form factor, first two numbers represent the diameter of the cell, and next two or three numbers represent the height of the cell.

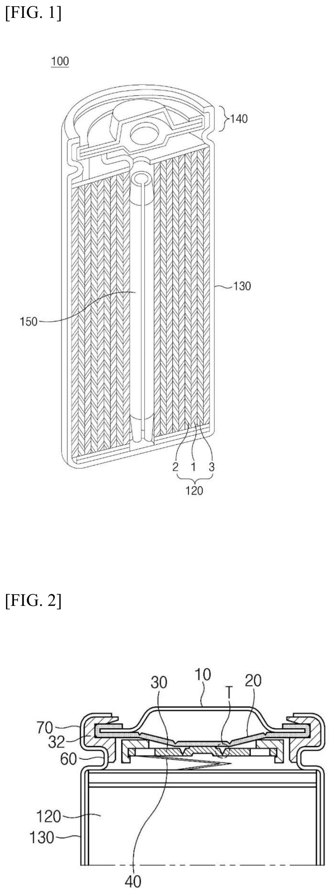

FIG. 1 is a view illustrating a secondary battery according to an embodiment of the present invention, and FIG. 2 is a view illustrating the structure of a cap assembly according to an embodiment of the present invention.

A can-shaped case 130 is a container that accommodates an electrode assembly 120 and an electrolyte therein, has an opening at the top thereof, and may be made of a conductive metallic material such as aluminum or steel.

The can-shaped case 130 may include a beading portion 60 and a crimping portion 70, as necessary. The beading portion 60 may be formed by indenting the periphery of the outer circumferential surface of the can-shaped case 130. The beading portion 60 may prevent the electrode assembly 120 accommodated in the can-shaped case 130 from falling out through the opening at the top of the can-shaped case 130, and function as a support on which the cap assembly 140 is securely positioned. The crimping portion 70 may be formed at the top of the beading portion 60, and have a shape that extends and bends to enclose the outer peripheral surface of the cap assembly 140 disposed on the beading portion 60 and a portion of the top surface of the cap assembly 140.

Next, the cap assembly 140 is provided to seal the top opening of the can-shaped case 130, and may include a top cap 10, a safety vent 20, and a CID filter 30 as illustrated in FIG. 2.

The top cap 10 may have a protruding shape to form a positive terminal and include an exhaust port (not illustrated), and the safety vent 20 may be disposed under the top cap 10. The CID filter 30 may be connected to the safety vent 20 at a portion of its upper surface, and connected to the electrode of the electrode assembly 120 at a portion of its lower surface. When a gas occurs from the electrode assembly 120 for causes such as overcharging and a high temperature, resulting in the increase in internal pressure, the safety vent 20 protrudes upward by reversing its shape so that the gas may be exhausted. At this time, the CID filter 30 also moves upward, and as a result, a notch T region breaks, blocking the flow of current. Therefore, further overcharging and explosion of the battery may be prevented.

The cap assembly 140 may further include a gasket 32 that provides an airtight seal between the top cap 10 and the can-shaped case 130, and has the insulation property. The top cap 10 may be pressed onto the beading portion 60 formed in the can-shaped case 130, and fixed by the crimping portion 70. The top cap 10 is a component made of a conductive metallic material, and may cover the top opening of the can-shaped case 130. The top cap 10 may be electrically connected to the positive electrode of the electrode assembly 120, and electrically insulated from the can-shaped case 130 via the gasket 32. Thus, the top cap 10 may function as the positive terminal of the secondary battery. The top cap 10 may have a protrusion projecting upward at the center thereof, and the protrusion may come into contact with an external power source such that current is applied from the external power source.

The secondary battery according to an embodiment of the present invention may be applied to not only a battery cell used as a power source of a small device, but also a unit cell of a battery module including a plurality of battery cells for a medium- or large-sized device. Examples of the medium- or large-sized device include electric vehicles, hybrid electric vehicles, plug-in hybrid electric vehicles, and energy storage systems (ESS).

Hereinafter, the present invention will be described using Examples. The Examples below are merely examples for facilitating the understanding of the present invention, and are not intended to limit the scope of the present invention. It is apparent to those skilled in the art that various changes and modifications may be made within the scope of the technical idea of the present invention, and the changes and modifications are included in the scope of the claims attached herewith.

### Experimental Example 1: Measurement of Mechanical Properties of Negative Electrode Current Collector

Commercially available electrolytic copper foils with thicknesses of 4.5 $\mu$m, 6 $\mu$m, 8 $\mu$m, 10 $\mu$m, and 12 $\mu$m were prepared as negative electrode current collectors of Examples 1 to 3 and Comparative Examples 1 to 6. The work hardening exponent, the yield strength, the elastic modulus, the ultimate tensile strength, and the elongation were measured for the electrolytic copper foils of Examples 1 to 3 and Comparative Examples 1 to 6. The work hardening exponent, the yield strength, the elastic modulus, the ultimate tensile strength, and the elongation were measured using an extensometer (manufactured by: ZwickRoell, product name: videoXtens biax 2-150 HP) under the measurement conditions of ASTM D 882. Table 1 herein below provides the results.

### Experimental Example 2: Calculation of Dislocation Density of Negative Electrode Current Collector

(1) XRD Analysis of Negative Electrode Current Collector

The X-ray diffraction (XRD) analysis was performed on each of the electrolytic copper foils of Examples 1 to 3 and Comparative Examples 1 to 6, which were prepared in Experimental Example 1 above. The X-ray diffraction analysis was performed using an X-ray diffraction analyzer (Bruker AXS D4 Endeavor) at 25 °C under the following conditions.

- Source: Cu radiation ($K\alpha_1$:$K\alpha_2$=8:2)
- 2θ: 40° to 91°
- Step size: 0.0015 °/s
- Total scan time: 168 min
- Voltage: 40 kV
- Current: 40 mA

(2) Calculation of Dislocation Density of Negative Electrode Current Collector

The dislocation density of the negative electrode current collector was calculated by measuring the full width at half maximum (FWHM) of each peak by the method described above from the XRD graph obtained by performing the X-ray diffraction analysis on each electrolytic copper foil of Examples 1 to 3 and Comparative Examples 1 to 6, and then, calculating the average of values obtained by the uniform deformation model (UDM), the uniform stress deformation model (USDM), and the uniform deformation energy density model (UDEDM). Table 1 herein below provides the calculation results.

## Experimental Example 3: Observation of Microstructure of Negative Electrode Current Collector

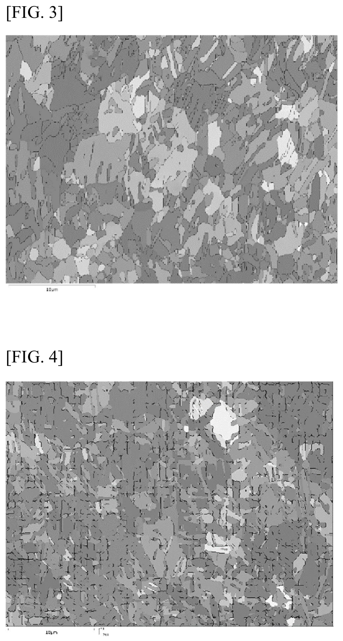

The microstructures of the electrolyzed copper foils of Examples 1 to 3 and Comparative Examples 3 to 4, which were prepared in Experimental Example 1, were observed and illustrated in FIGS. 3 to 7.
FIG. 3 is an EBSD inverse pole figure (IPF) map obtained by capturing an image of the air side of the electrolytic copper foil of Example 1 at a 2000x magnification.
FIG. 4 is an EBSD inverse pole figure (IPF) map obtained by capturing an image of the air side of the electrolytic copper foil of Example 2 at a 2000x magnification.

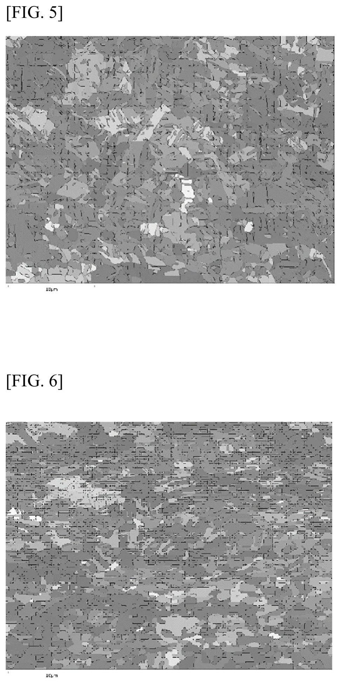

FIG. 5 is an EBSD inverse pole figure (IPF) map obtained by capturing an image of the air side of the electrolytic copper foil of Example 3 at a 2000x magnification.
FIG. 6 is an EBSD inverse pole figure (IPF) map obtained by capturing an image of the air side of the electrolytic copper foil of Comparative Example 3 at a 2000x magnification.

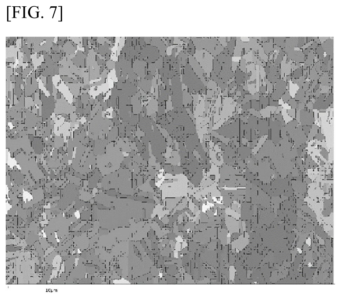

FIG. 7 is an EBSD inverse pole figure (IPF) map obtained by capturing an image of the air side of the electrolytic copper foil of Comparative Example 4 at a 2000x magnification.
Further, from the IPF maps, the average size (unit: $\mu$m) of the grains at the air side and the drum side of each electrolytic copper foil of Examples 1 to 3 and Comparative Examples 1 to 6 was measured and represented in Table 1 herein below. The average size of the grains indicates the average size of the grains that are clearly separated by the high angle grain boundaries, and may be measured by the method of calculating the misorientation angle using the EBSD.

## Experimental Example 4: Observation of Occurrence of Crack/Short in Negative Electrode Current Collector of Can-Type Secondary Battery

(1) Manufacture of Can-Type Secondary Battery

$LiCoO_2$, polyvinylidenefluoride (PVdF), carbon nanotube (CNT), and carbon black were added to an N-methylpyrrolidone (NMP) solvent in a weight ratio of 97.59:1.18:0.24:0.09 and stirred to prepare a positive electrode slurry. The positive electrode slurry was applied to one side of an aluminum thin film with a thickness of 10 $\mu$m at a loading amount of 18.60 mg/cm$^2$, and then, dried under vacuum. The dried positive electrode slurry was rolled, dried in a vacuum oven at 130 °C for 6 hours, and then, punched to manufacture the positive electrode.
A negative electrode slurry was applied to one side of each electrolytic copper foil of Examples 1 to 3 and Comparative Examples 1 to 6, which were prepared in Experimental Example 1, and dried under vacuum to manufacture the negative electrode. Specifically, spherical artificial graphite, carbon black, carboxylmethyl cellulose (CMC), and styrene-butadiene rubber (SBR) were added to distilled water in a weight ratio of 97.35:0.5:1.15:1 and stirred to prepare the negative electrode slurry. The negative electrode slurry was applied to one side of each electrolytic copper foil of Examples 1 to 3 and Comparative Examples 1 to 6 at a loading amount of 10.48 mg/cm$^2$, and then, dried under vacuum. The dried negative electrode slurry was rolled, followed by a first heat treatment in a vacuum oven at 160 °C for 3 hours, a second heat treatment at 50 °C for 50 minutes, and a third heat treatment at 25 °C for 15 minutes, to manufacture the negative electrode.
A separator was disposed between the manufactured negative electrode and positive electrode to fabricate an electrode assembly, the electrode assembly was positioned in a battery can, and then, an electrolyte was injected into the case to manufacture a battery cell. The electrolyte was prepared by dissolving $LiPF_6$ at a concentration of 1 M in a mixed organic solvent of ethylene carbonate (EC), dimethyl carbonate (DMC), diethyl carbonate (DEC) with a volume ratio of 1:1:1, and adding 5 wt% vinylene carbonate (VC) thereto.

(2) Observation of Occurrence of Crack/Short, etc.

Next, while setting one cycle in which a can-type secondary battery manufactured using each electrolytic copper foil of Examples 1 to 3 and Comparative Examples 1 to 6 as the negative electrode current collector was charged and discharged within 3.0 V to 4.25 V under conditions of 0.5 C/1.0 C at 45 °C, the occurrence of crack/short in the negative electrode was observed during the 500th cycle. Table 1 below provides the observation results.

- O: Occurrence of crack/short

- X: Non-occurrence of crack/short

[Table 1]

| | | Comp. Ex. 1 | Comp. Ex. 2 | Ex. 1 | Comp. Ex. 3 | Ex. 2 | Comp. Ex. 4 | Ex. 3 | Comp. Ex. 5 | Comp. Ex. 6 |
|---|---|---|---|---|---|---|---|---|---|---|
| Thickness ($\mu$m) | | 4.5 | | 6 | | 8 | | 10 | 12 | |
| Work Hardening Exponent | | 0.08 | 0.09 | 0.11 | 0.09 | 0.16 | 0.30 | 0.18 | 0.20 | 0.21 |
| Dislocation Density ($\times 10^7$/mm$^2$) | | 2 | 2.1 | 4 | 3 | 4 | 7 | 4 | 4 | 4.3 |
| Yield Strength (kgf/mm$^2$) | | 27 | 27.4 | 31 | 30 | 31 | 35 | 31 | 31 | 31 |
| Elastic Modulus (GPa) | | 130 | 130 | 130 | 130 | 130 | 130 | 130 | 130 | 130 |
| Ultimate Tensile Strength (kgf/mm$^2$) | | 31 | 31.5 | 34 | 32 | 35 | 60 | 36 | 38 | 38.2 |
| Elongation (%) | | 4 | 5 | 11.5 | 6.7 | 16 | 9 | 17 | 20 | 20.3 |
| Grain Average Size ($\mu$m) | Air Side | 0.70 | 0.68 | 0.66 | 0.70 | 0.68 | 0.40 | 0.70 | 0.70 | 0.70 |
| | Drum Side | 0.70 | 0.70 | 0.50 | 0.80 | 0.50 | 0.30 | 0.60 | 0.60 | 0.60 |
| Occurrence of Crack/Short | | O | O | X | O | X | O | X | - | - |
| Energy Density | | 1.03 | 1.03 | 1.02 | 1.00 | 1.00 | 1.00 | 0.98 | 0.96 | 0.96 |

As represented in Table 1 above, it may be verified that since the high work hardening performance is achieved in Examples 1 to 3 in which the thickness of the negative electrode current collector is 6 $\mu$m to 10 $\mu$m, and the work hardening exponent "n" is 0.10 to 0.25, the negative electrode current collector may be elongated without undergoing crack/short even when deformed into the jelly roll shape and inserted into the can-shaped case.

**Experimental Example 5: Analysis of Texture Coefficient TC of Negative Electrode Current Collector**

From the XRD graph obtained by performing the X-ray diffraction analysis on each electrolytic copper foil of Examples 1 to 3 and Comparative Examples 1 to 6 according to Experimental Example 2 above, TC(111), TC(200), TC(220), and TC(311), defined by Equation 2 below, were calculated. Table 2 below provides the results.

[Equation 2]

$$TC(\text{hkl}) = \frac{I(hkl)/I_0(hkl)}{\frac{1}{4}\left(\frac{I(111)}{I_0(111)} + \frac{I(200)}{I_0(200)} + \frac{I(220)}{I_0(220)} + \frac{I(311)}{I_0(311)}\right)}$$

I(hkl) represents the peak intensity of the (hkl) crystal plane in the XRD graph of the negative electrode current collector at 25 °C, and $I_0$(hkl) represents the peak intensity of the (hkl) crystal plane in the XRD graph of a reference sample, in which $I_0(111)=100$, $I_0(200)=46$, $I_0(220)=20$, and $I_0(311)=17$.

[Table 2]

|  | TC(111) | TC(200) | TC(220) | TC(311) | TC(111)/TC(200) |
|---|---|---|---|---|---|
| Example 1 | 0.91 | 0.79 | 0.98 | 1.32 | 1.15 |
| Example 2 | 0.89 | 0.65 | 1.04 | 1.42 | 1.37 |
| Example 3 | 1.00 | 0.78 | 1.04 | 1.18 | 1.28 |
| Comparative Example 1 | 1.03 | 1.75 | 0.75 | 0.47 | 0.59 |
| Comparative Example 2 | 1.08 | 1.68 | 0.75 | 0.49 | 0.64 |
| Comparative Example 3 | 0.82 | 2.24 | 0.58 | 0.36 | 0.37 |
| Comparative Example 4 | 0.28 | 0.34 | 2.76 | 0.62 | 0.82 |
| Comparative Example 5 | 1.19 | 1.01 | 0.92 | 0.88 | 1.18 |
| Comparative Example 6 | 1.21 | 1.18 | 0.87 | 0.74 | 1.03 |

From the calculation results, the ratio of TC(hkl) at each crystal plane to the total sum of TC(111), TC(200), TC(220), and TC(311) (relative texture coefficient) was calculated, and Table 3 below provides the results.

[Table 3]

|  | Relative Texture Coefficient (Unit: %) | | | | |
|---|---|---|---|---|---|
|  | TC(111) | TC(200) | TC(220) | TC(311) | TC(220)+TC (311) |
| Example 1 | 22.75 | 19.75 | 24.5 | 33.0 | 57.5 |
| Example 2 | 22.25 | 16.25 | 26.0 | 35.5 | 61.5 |
| Example 3 | 25.0 | 19.5 | 26.0 | 29.5 | 55.5 |
| Comparative Example 1 | 25.75 | 43.75 | 18.75 | 11.75 | 30.5 |
| Comparative Example 2 | 27.0 | 42.0 | 18.75 | 12.25 | 31.0 |
| Comparative Example 3 | 20.5 | 56.0 | 14.5 | 9.0 | 23.5 |
| Comparative Example 4 | 7.0 | 8.5 | 69.0 | 15.5 | 84.5 |
| Comparative Example 5 | 47.75 | 25.25 | 23.0 | 22.0 | 45.0 |
| Comparative Example 6 | 30.25 | 29.5 | 21.75 | 18.5 | 40.25 |

## Claims

1.   A negative electrode current collector having a thickness of 6 $\mu$m to 10 $\mu$m and a work hardening exponent "n" of 0.10 to 0.25, wherein the work hardening exponent "n" is defined according to Equation 1 below,

$$[\text{Equation 1}]$$

$$\sigma = K \times \varepsilon^{n}$$

in Equation 1 above, "$\sigma$" represents a true stress, "K" represents a strength factor, "$\varepsilon$" represents a true strain, and "n" is a work hardening exponent.

2.   The negative electrode current collector according to claim 1, wherein a dislocation density of the negative electrode current collector is $4 \times 10^{7}/mm^{2}$ or more.

3.   The negative electrode current collector according to claim 1, wherein a yield strength of the negative electrode current collector is 31 kgf/mm$^{2}$ or more.

4. The negative electrode current collector according to claim 1, wherein an elastic modulus of the negative electrode current collector is 130 GPa to 140 GPa.

5. The negative electrode current collector according to claim 1, wherein an elongation of the negative electrode current collector is 13 % or more.

6. The negative electrode current collector according to claim 1, wherein the negative electrode current collector includes a copper thin film.

7. The negative electrode current collector according to claim 6, wherein the copper thin film is an electrolytic copper foil, and
the electrolytic copper foil includes a drum side and an air side opposite to the drum side.

8. The negative electrode current collector according to claim 7, wherein an average size of grains included in the drum side is 0.50 $\mu$m or less.

9. The negative electrode current collector according to claim 7, wherein an average size of grains included in the air side is 0.68 $\mu$m or less.

10. The negative electrode current collector according to claim 7, wherein an average size of grains included in the drum side is smaller than an average size of grains included in the air side.

11. The negative electrode current collector according to claim 1, wherein the negative electrode current collector has TC(200) and TC(220) of 2.20 or less, in which TC(200) and TC(220) are defined by Equation 2 below,

[Equation 2]

$$TC(\text{hkl}) = \frac{I(hkl)/I_0(hkl)}{\frac{1}{4}\left(\frac{I(111)}{I_0(111)} + \frac{I(200)}{I_0(200)} + \frac{I(220)}{I_0(220)} + \frac{I(311)}{I_0(311)}\right)}$$

in Equation 2 above, I(hkl) represents a peak intensity of a (hkl) crystal plane in an XRD graph obtained by performing an X-ray diffraction analysis on the negative electrode current collector at 25 °C, and
$I_0$(hkl) represents a peak intensity of a (hkl) crystal plane in an XRD graph of a reference sample,
in which $I_0$(111)=100, $I_0$(200)=46, $I_0$(220)=20, and $I_0$(311)=17.

12. The negative electrode current collector according to claim 11, wherein the negative electrode current collector has TC(111) of 2.20 or less, in which TC(111) is defined by Equation 2 above.

13. The negative electrode current collector according to claim 12, wherein a ratio of TC(111) to TC(200) (TC(111)/TC(200)) is 0.8 or more.

14. The negative electrode current collector according to claim 11, wherein the negative electrode current collector has TC(311) of 2.20 or less, which is defined by Equation 2 above.

15. The negative electrode current collector according to claim 11, wherein a ratio of TC(200) to a total sum of TC(111), TC(200), TC(220), and TC(311) defined by Equation 2 above is 40 % or less, and
a ratio of a sum of TC(220) and TC(311) to the total sum of TC(111), TC(200), TC(220), and TC(311) is 50 % or more.

16. The negative electrode current collector according to claim 11, wherein a ratio of TC(111) to a total sum of TC(111), TC(200), TC(220), and TC(311) defined by Equation 2 above is 20 % or more.

17. A can-type secondary battery comprising:

an electrode assembly including a negative electrode, a separator, and a positive electrode that are sequentially stacked and wound in one direction; and
a can-shaped case that accommodates the electrode assembly,

wherein the negative electrode includes the negative electrode current collector according to claim 1.

18. The can-type secondary battery according to claim 17, wherein the can-shaped case is cylindrical.

19. The can-type secondary battery according to claim 17, wherein the can-type secondary battery is a cylindrical type battery having a diameter of 15 mm or more.

[FIG. 1]

[FIG. 2]

[FIG. 3]

[FIG. 4]

[FIG. 5]

[FIG. 6]

[FIG. 7]

## INTERNATIONAL SEARCH REPORT

International application No.

**PCT/KR2024/002692**

### A. CLASSIFICATION OF SUBJECT MATTER

**H01M 4/66**(2006.01)i; **H01M 10/04**(2006.01)i; **H01M 10/052**(2010.01)i; **G01N 23/207**(2006.01)i; **H01M 4/02**(2006.01)i

According to International Patent Classification (IPC) or to both national classification and IPC

### B. FIELDS SEARCHED

Minimum documentation searched (classification system followed by classification symbols)

H01M 4/66(2006.01); B21B 1/40(2006.01); C22C 38/00(2006.01); C22C 9/00(2006.01); C22C 9/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극(anode), 집전체(current collector), 동박(copper foil), 진응력(true stress), 변형율(strain rate), 캔형(can type), 이차전지(secondary battery), 기계적 강도(mechanical strength)

### C. DOCUMENTS CONSIDERED TO BE RELEVANT

| Category* | Citation of document, with indication, where appropriate, of the relevant passages | Relevant to claim No. |
|---|---|---|
| A | JP 2012-201965 A (JX NIPPON MINING & METALS CORP.) 22 October 2012 (2012-10-22)<br>See claims 1, 4 and 7, paragraphs [0007]-[0019], [0027] and [0028], and table 1. | 1-19 |
| A | JP 2020-042958 A (PROTERIAL LTD.) 19 March 2020 (2020-03-19)<br>See claims 1 and 15. | 1-19 |
| A | JP 2012-224941 A (JX NIPPON MINING & METALS CORP.) 15 November 2012 (2012-11-15)<br>See claim 1. | 1-19 |
| A | JP 2016-036829 A (JX NIPPON MINING & METALS CORP.) 22 March 2016 (2016-03-22)<br>See claims 1 and 2. | 1-19 |
| A | JP 2014-127462 A (UACJ FOIL CORP.) 07 July 2014 (2014-07-07)<br>See claim 1. | 1-19 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 June 2024** | **13 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/002692**

| Patent document cited in search report | | | Publication date (day/month/year) | Patent family member(s) | | | Publication date (day/month/year) |
|---|---|---|---|---|---|---|---|
| JP | 2012-201965 | A | 22 October 2012 | JP | 5496139 | B2 | 21 May 2014 |
| JP | 2020-042958 | A | 19 March 2020 | JP | 7172311 | B2 | 16 November 2022 |
| JP | 2012-224941 | A | 15 November 2012 | JP | 5124039 | B2 | 23 January 2013 |
| | | | | TW | 201242448 | A | 16 October 2012 |
| | | | | WO | 2012-128099 | A1 | 27 September 2012 |
| JP | 2016-036829 | A | 22 March 2016 | CN | 105375033 | A | 02 March 2016 |
| | | | | CN | 105375033 | B | 12 October 2018 |
| | | | | KR | 10-1677852 | B1 | 18 November 2016 |
| | | | | KR | 10-2016-0018352 | A | 17 February 2016 |
| | | | | TW | 201618362 | A | 16 May 2016 |
| | | | | TW | I631756 | B | 01 August 2018 |
| JP | 2014-127462 | A | 07 July 2014 | JP | 6039868 | B2 | 07 December 2016 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230028787
- KR 1020230044730
- KR 1020230052680
- KR 1020230058313
- KR 1020240028937